# EUROPEAN PATENT SPECIFICATION

(11) **EP 0 577 701 B1**
(45) Date of publication and mention of the grant of the patent: **15.11.1995**
(21) Application number: 92908138.8
(22) Date of filing: 03.04.1992
(51) Int. Cl.: F26B 3/08, F26B 17/14, C10F 5/00

(54) **A METHOD FOR HEAT TREATMENT OF BIOLOGICAL MATERIAL**
VERFAHREN ZUR BEHANDLUNG VON BIOLOGISCHEM MATERIAL
PROCEDE DE TRAITEMENT THERMIQUE D'UNE MATIERE BIOLOGIQUE

(30) Priority: 05.04.1991 SE 9100998
(43) Date of publication of application: 12.01.1994
(73) Proprietor: KULLENDORFF, Anders, S-436 42 Askim (SE)
(72) Inventor: KULLENDORFF, Anders, S-436 42 Askim (SE)
(74) Representative: Roth, Ernst Adolf Michael
(86) International application number: SE9200214
(87) International publication number: WO9217744

(56) References cited:
- SE-B- 446 767
- SE-B- 450 971
- US-A- 3 225 454
- US-A- 4 304 049

## Description

### Background of the invention

The present invention refers to a method for roasting of biomaterial, for example wood-chips, timber and the like in a plant including a treatment chamber, which forms a closed system with an external circulation conduit, connected via an inlet and an outlet to the opposite ends thereof, where the biomaterial is input into and after treatment is withdrawn from the treatment chamber through at least one opening with a sluice, which prevents air penetration in the system, and where the system during operation is held essentially filled with steam near atmospheric pressure, which steam is brought to circulate in the system through the circulation conduit and the treatment chamber, and in addition a part of the steam, which corresponds the moisture expelled from the biomaterial is drained and condensed.

Such roasting of biomaterial can be used for different purposes. An appropriate area of the kind is preprocessing of biofuel, such as wood-chips, peat, sawdust, and so on.

With increasing fuel costs for conventional fuels, biofuels have become a still more interesting fuel alternative, in particular in district heating centrals and the like. In order not to obtain unfavourable utilization of the fuel energy content at combustion of such biofuel by moisture contained in the fuel having to be vaporized, a drying out of the biofuel, that is, a drying before further processing or use, can be economically motivated.

Earlier has been developed processes for roasting, i.e. drying and partial pyrolysis of biofuels and firstly of wood-chips. A method for drying as well as for roasting is to use flue gases, by which however the drawback is that the fire hazard is great. Another method by a pure drying process has been the use of steam, as a drying medium, by which the drying material is surrounded by water vapour under overpressure. This means that the plant has to be sealed against the environment, which implies price raising constructive solutions.

Dryers which use fluidization techniques are available in several different designs, by which the basic principle is that drying takes place by direct blowing of air, flue gas or steam from below onto the drying material. At high speed enough onto the drying medium the bed, ie. the drying material in itself begins to hover. Another suitable field of application for heat treatment of biomaterial is that of rot-protection treatment of construction wood.

A method for drying biofuel is known from SE-A-450 971, wherein is used a vertical drying channel, a cyclone separator and a recirculation conduit incorporating a fan and heating means, whereby the method is using steam heated by the heating means to a temperature of about 160°C and used as fluidization agent.

Today construction wood is treated, as protection against mould fungus attack generally through pressure impregnation, which is an environmentally questioned method, which is fenced round with many constraints. Thus it is regarded that processing waste from pressure impregnated wood is so dangerous to the environment, that today it is safeguarded and is neutralized by a waste processing company.

The object is now to offer a method of roasting by means of overheated steam to convert the material, so that at least the surface layer obtains hydrophobe characteristics, which prevents attack of mould fungus. The characteristics of the remainder of the material become similar to those of normal pressure impregnated wood. Waste material from working and the wood as such can directly be utilized as fuel, and even for example spruce, which is difficult to impregnate under pressure can be treated with this method without problems.

In accordance with the invention this object is solved by providing a method for roasting of biomaterial, e. g. wood-chips, timber and the like in a plant including a treatment container, which forms a closed system connected with an external circulation pipe at opposite ends thereof via an inlet and an outlet, by means of which an improved operation economy can be achieved, at the same time as above stated remaining drawbacks are eliminated and this has been achieved by the the biomaterial being put into and after treatment being withdrawn from the treatment chamber through at least one opening with a sluice, which prevents air penetration in the system, and where the system during operation is held essentially filled with steam near atmospheric pressure, which steam is brought to circulate in the system through the circulation conduit and the treatment chamber, and in addition a part of the steam, which corresponds the moisture expelled from the biomaterial is drained and condensed, characterised in that the steam is held at a temperature of at least 260°C, that is, slightly above desired treatment temperature, through indirect heat transmission from a heat carrier at the inlet in the treatment chamber and that gases escaping from the material are collected and burned for heating of the heat carrier.

### Specification of drawings

In the following the invention will be described more in detail with reference to two plants in which the method according to the invention can be accomplished, such as shown in the accompanying drawings.

Fig. 1 discloses diagrammatically a basic view of a first embodiment of a drying plant for performing the method according to the invention.

Fig. 2 is a corresponding view of a second embodiment of a plant for performing the method according to the invention.

### Specification of preferred embodiments

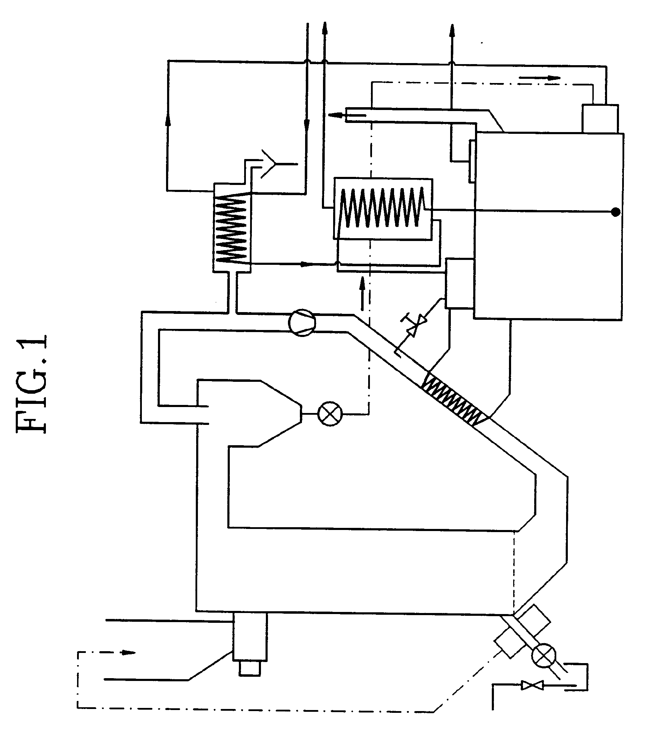

In Fig. 1 the heat treatment plant according to the invention shown in vertical section in principle is intended to be used for drying and subsequent roasting of pulverized biomaterial, such as preferably wood-chips, and includes a vertical fluidization tower 1 with a grate 2 applied at the bottom. At the top of the tower there is provided feed pocket 4 for biofuel and at the bottom of the tower is connected a discharge pipe 5 for the roasted product. As well the input pipe 3 as the discharge pipe 5 are connected to the tower inside via sluices 6, which to a substantial degree prevents air from entering into the tower. Between the top of the tower and the bottom is connected an external circulation pipe 7 with a fan unit 8 arranged to forward drying medium through the circulation pipe, so that this is input at the bottom of the fluidization tower 1 through the grate 2 and the biofuel lying thereon, only indicated in the figure, and discharged from the tower at the top thereof. In the circulation pipe there is further provided an overheating battery 9 arranged to overheat the drying medium, which is made up by water vapour of atmospheric pressure, so that this for a first drying step has a temperature of between 150 and 250°C, preferably maximum of about 200°C and for a roasting step has a temperature of at least 260°C at its entry at the bottom of the fluidization tower 1. The overheater 9 is connected to a heat generator, for example in the shape of a boiler 10. In the embodiment shown the overheater 9 connected to a boiler dome 11 on the boiler 10, but as a heat medium alternatively can be used furnace water, flue gases or possibly hot oil. Between the upper part fluidization tower and the circulation pipe there is provided a particle separator in the shape of a cyclone 12, in which small fractions of input biofuel and particles that accompany the steam and the pyrolysis gas stream is separated. From the cyclone 12 such separated particles are conveyed via a dust conduit 13 to the boiler 10 where dust burning takes place. Alternatively such as is indicated at 26 in Fig. 1 particles separated in the cyclone wholly or partly are returned to the treatment chamber. Between the cyclone 12 and the fan 8 a drain pipe 14 is connected to the circulation pipe for the surplus of steam, which by the roasting is generated through fluid loss from the biofuel. This pipe 14 leads to a condenser 15 from which condensate is discharged, possibly as furnace water. Not condensable gases are drained at coldest end of the condenser and are conveyed via a conduit 16 to the boiler 10 for combustion. Outgoing heat exchanger medium from the heat exchanger 17 of the condenser passes preferably a heat exchanger 18 connected intermediate the boiler dome 11 of the boiler 10 and the input side, where the medium is heated further before it is discharged via a conduit 19 to a heat system not shown, for example a district heating system. The boiler 10 has an outgoing conduit 20 for a heat medium, which as well can be supplied to a heat system or the like. Moreover, there is provided a fluegas outlet 21.

From the boiler dome 11 a steam conduit 22 provided with a closeable valve runs to the circulation pipe 7, into which it discharges before the overheater 9.

In the discharge pipe 5 for the roasted product there may be provided a heat exchanger 23, which can be used for preheating of the biofuel in the feed pocket 4, which is illustrated by the dashed the line 24. After discharging of the roasted product it is cooled preferably through water pouring at 25 to prevent spontaneous ignition.

The plant operates in the following way:
Biofuel, preferably in the form of wood-chips are input in the fluidization tower 1 via the feed pocket 4, the sluice 6 and the conduit 3 so that they will end up on the grate 2. At the start of the process a small amount steam is supplied via the conduit 22 to the circulation pipe, where it is overheated in the overheater 9 and through impact of the fan 8 is driven with such a speed that it by the entry of the fluidization tower through the grate has a temperature of preferably ca 260°C and such a speed that the input chips begin to fluidize, that is, hovers in a steam flow of essentially atmospheric pressure. Hereby is introduced a mild pyrolysis, which gives the product roasted wood, which is a something between untreated wood and charcoal, after relatively short dwelling time.

As soon the process has been initiated, the steam supply is shut off via the conduit 22. At the upper end of the tower the steam as well as pyrolysis gases leave, whereby particles accompanying therein are separated in the cyclone 12. The steam surplus, which is obtained by moisture leaving the wood in the fluidization tower 1, is discharged through the conduit 14 and is condensed in the condenser 15. Uncondensable gases are lead by means of a pipe 16 to a boiler 10 in which they are burned together with dust, which is supplied from the cyclone 12. The heat for overheating of the steam in the circulation of the tower 1 and the circulation pipe 7 is obtained from this boiler 10. The heat medium, which leaves the condenser 15 passes preferably a further heat exchanger 18, which is connected to the boiler, and subsequently is used preferably with hot water from the boiler in an external heat system.

Gases, which are driven off through the prepyrolysis as stated can be used to operate the process and/or a gas driven motor located at another place.

In the discharge pipe 5 for the roasted product a heat exchanger 23 is provided, the outgoing heat medium of which was used to preheat the biomaterial in the feed pocket 4.

The roasted product produced from wood-chips is used as substitute material for charcoal, and the exchange of roasted wood is 3 to 4 times larger with the economic advantages as an additional positive factor.

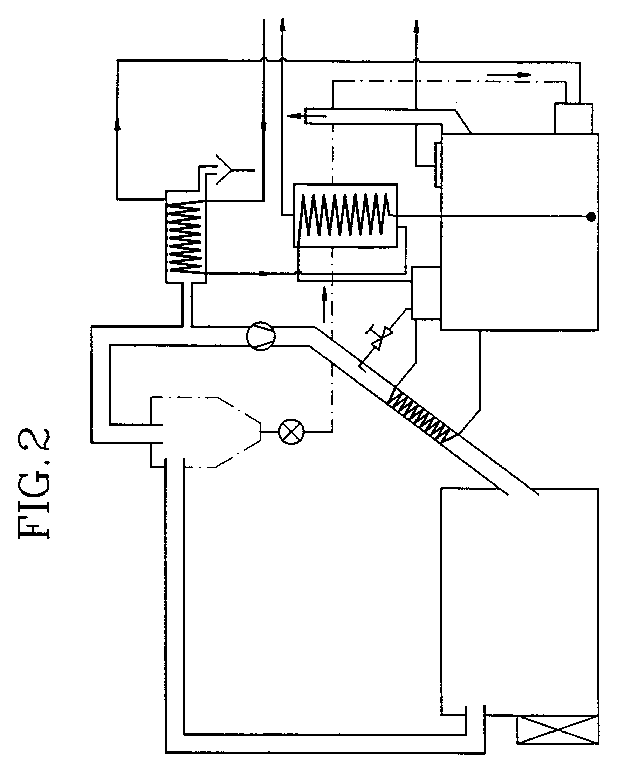

By the plant shown in Fig. 2, the purpose is to treat construction wood, such as sawed plank and ribs, so as to give the same hydrophobe characteristics, which prevents attack of mould fungus. This plant to its basic structure corresponds to that according to Fig. 1, but instead of the fluidization tower the plant here is provided with a horizontal furnace chamber, which can be a batch oven or a tunnel furnace, in which the material, which is going to be treated is pushed into or through on a vehicle or other suitable transporter. Since the plant is operated at atmospheric pressure troublesome supply problems will be avoided and there is only need for one sluice with a reasonable gas seal. In contrast to the previously known so called pneumatic counter pressure dryer in this case one works with a high relative velocity between the heat medium and the material, which implies that one does not as in this older dryer, which works with low relative velocity, need to elevate the pressure to bridge the external thermal transmission resistance. The plant according to this embodiment corresponds to the rest; the embodiment according to Fig. 1, with the exception that the particle separator or cyclone, which is present at the embodiment according to Fig. 1 is not necessary at this embodiment, even if it may be present.

An advantage with the method according to the invention is that one can work with system integration, whereby one can first dry the material at a heat level of between 160 and 220°C and thereafter, possibly in a series connected plant one can achieve the roasting by a temperature of about 260°C. Hereby one can preferably use the energy in series, whereby for example in a heating plant one can borrow energy on a level of ca 180°C and redeliver it on a level immediately below 100°C, that is, enough for the return water in a district heating plant, in a combined power and heating plant or as preprocess for the gasifying process. In the corresponding way, at saw-mills, which have very great heat requirements at the level 60°C for their wood dryers, one can first heat treat the wood products on a high temperature level and subsequently use the residual heat in the conventional wood dryer. Thereby one should first dry in a conventional way at 60°C and then let the material run through steam drying and roasting.

By a plant including different treatment parts it is advantageous if these are arranged in series, or that one has two parallel parts in which the treatment occurs in batch and where the heat is tapped down alternately.

## Claims

1. Method for roasting of biomaterial, for example wood-chips, timber and the like in a plant including a treatment chamber (1,101) which forms a closed system with an external circulation conduit (7), connected via an inlet and an outlet to the opposite ends thereof, where the biomaterial is put into and after treatment is withdrawn from the treatment chamber through at least one opening with a sluice (6,103), which prevents air penetration in the system, and where the system during operation is held essentially filled with steam near atmospheric pressure, which steam is brought to circulate in the system through the circulation conduit and the treatment chamber, and in addition a part of the steam, which corresponds the moisture expelled from the biomaterial is drained and condensed,
**characterized therein,**
that the steam through indirect heat transmission from a heat carrier (9) at the inlet (2,102) in the treatment chamber is held at a temperature of at least 260°C, that is, slightly above desired treatment temperature, and that gases escaping from the material are collected and burned for heating of the heat carrier.

2. Method according to the patent claim 1,
**characterized therein,**
that particles that are separated from the biomaterial are collected in a particle separator (12) provided in the circulation conduit (7), connectable to the device (10) for combustion of separated material for heating of the heat carrier (9).

3. Method according to the patent claim 1 or 2, wherein the treatment chamber is constituted by a fluidization tower (1) where the inlet and outlet of the circulation conduit in the fluidization tower are provided at the bottom and the top of the tower respectively,
**characterized therein,**
that the biomaterial is put through a first opening (3), provided with a sluice (6) at the top of the fluidization tower (1), in which the biomaterial by means of the circulating steam is brought to fluidize and the roasted product is withdrawn through a second opening (5), provided with a sluice (6) at the bottom of the tower, and that the steam is held at a temperature of at least 260°C at the inlet of the fluidization tower (1).

4. Method according to the patent claim 3,
**characterized therein,**
that the material to be roasted is first dried in the same or another apparatus at a temperature of approx. 200°C.

5. Method according to the patent claim 3 or 4,
**characterized therein,**
that the biomaterial is predried before further treatment by using heat, which is obtained in connection with refrigeration of the roasted material withdrawn.

6. Method according to any of preceding claim,
**characterized therein,**
that the treatment chamber (1,101) of the plant is system integrated by several containers being connected, whereby drying of the material is carried out in a first container and steam roasting in a second container at the higher temperature, whereby the heat medium after lowering of temperature in the second container is input at the inlet (2,102) of the first container of lower temperature.

## Patentansprüche

1. Verfahren zum Rösten von biologischem Material, z.B. Holzspänen, Nutzholz und dergleichen, in einer Anlage, die eine Bearbeitungskammer (1, 101) einschließt, die ein geschlossenes System mit einem äußeren Umluftkanal (7) bildet, der durch einen Einlaß und einen Auslaß mit den einander gegenüberliegenden Enden der Kammer verbunden ist, wobei das biologische Material in die Bearbeitungskammer eingefüllt und nach der Bearbeitung aus ihr durch mindestens eine Öffnung mit einer Schleuse (6, 103), die das Eindringen von Luft in das System verhindert, entnommen wird, und wobei das System während des Betriebes im wesentlichen bei annäherndem Luftdruck mit Dampf gefüllt ist, der durch den Umluftkanal und die Bearbeitungskammer zum Zirkulieren im System gebracht wird, und zusätzlich ein Teil des Dampfes, der der aus dem biologischen Material entzogenen Feuchtigkeit entspricht, abgeleitet und kondensiert wird,
dadurch gekennzeichnet,
daß der Dampf durch indirekten Wärmeübergang von einem Wärmeträger (9) am Einlaß (2, 102) in die Bearbeitungskammer auf einer Temperatur von mindestens 260°C, also etwas über der gewünschten Bearbeitungstemperature, gehalten wird und aus dem Material austretende Gase gesammelt und zum Erwärmen des Wärmeträgers verbrannt werden.

2. Verfahren nach Anspruch 1,
dadurch gekennzeichnet,
daß vom biologischen Material abgeschiedene Teilchen in einem Teilchenabscheider (12) gesammelt werden, der sich im Umluftkanal (7) befindet, der an die Vorrichtung (10) zum Verbrennen abgeschiedenen Materials zum Erwärmen des Wärmeträgers (9) anschließbar ist.

3. Verfahren nach Anspruch 1 oder 2, dadurch gekennzeichnet, daß die Bearbeitungskammer durch einen Fließbetturm (1) gebildet wird, wobei sich der Einlaß und der Auslaß des mit dem Fließbetturm verbundenen Umluftkanals am unteren bzw. oberen Ende des Turms befinden,
dadurch gekennzeichnet,
daß das biologische Material durch eine erste Öffnung (3) mit einer Schleuse (6) am oberen Ende des Fließbetturms (1), in dem der zirkulierende Dampf das biologische Material zum Wirbeln bringt, eingefüllt und das geröstete Material durch eine zweite Öffnung (5) mit einer Schleuse (6) am unteren Ende des Turms entnommen und der Dampf auf einer Temperatur von mindestens 260°C am Einlaß des Fließbetturms (1) gehalten wird.

4. Verfahren nach Anspruch 3,
dadurch gekennzeichnet,
daß das zu röstende Material zuerst in derselben oder einer anderen Vorrichtung bei einer Temperatur von ca. 200°C getrocknet wird.

5. Verfahren nach Anspruch 3 oder 4,
dadurch gekennzeichnet,
daß das biologische Material vor der weiteren Behandlung unter Benutzung von Wärme, die bei der Kühlung des entnommenen gerösteten Materials entsteht, vorgetrocknet wird.

6. Verfahren nach einem der Ansprüche 1 bis 5,
dadurch gekennzeichnet,
daß die Bearbeitungskammer (1, 101) der Anlage durch mehrere verbundene Behälter systemintegriert ist, wobei das Material in einem ersten Behälter getrocknet und in einem zweiten Behälter bei höherer Temperatur mit Dampf geröstet wird, wobei das Wärmemedium nach dem Absenken der Temperatur im zweiten Behälter am Einlaß (2, 102) des ersten Behälters, der eine niedrigere Temperatur hat, eingeleitet wird.

## Revendications

1. Procédé de grillage d'un matériau biologique, par exemple des copeaux de bois, des matériaux de construction en bois et similaires, dans une installation comprenant une chambre de traitement (1, 101) qui forme un système fermé doté d'un conduit de circulation externe (7), qui y est raccordé par une entrée et une sortie ménagées aux deux extrémités de ladite chambre, dans lequel le matériau biologique est introduit dans la chambre de traitement, d'où il est ensuite extrait après traitement, par au moins une ouverture dotée d'une vanne (6, 103) qui empêche l'air de pénétrer dans le système, et dans lequel le système, pendant l'opération, est essentiellement occupé par de la vapeur à une pression proche de la pression atmosphérique, ladite vapeur étant amenée à circuler dans le système par le conduit de circulation et la chambre de traitement, une partie de la vapeur, qui correspond à l'humidité extraite du matériau biologique, étant en outre évacuée et condensée, caractérisé en ce que la vapeur, par la transmission indirecte de chaleur d'un conducteur de chaleur (9) à l'entrée (2, 102) de la chambre de traitement, est maintenue à une température d'au moins 260°C, c'est-à-dire légèrement supérieure à la température de traitement voulue, et en ce que les gaz qui s'échappent du matériau sont récupérés et brûlés pour le chauffage du conducteur de chaleur.

2. Procédé selon la revendication 1, caractérisé en ce que les particules qui sont extraites du matériau biologique sont récupérées dans un séparateur de particules (12) disposé dans le conduit de circulation (7) et susceptible d'être raccordé au dispositif (10) de combustion du matériau décomposé pour le chauffage du conducteur de chaleur (9).

3. Procédé selon l'une des revendications 1 ou 2, selon lequel la chambre de traitement est constituée par une tour de fluidisation (1) dans laquelle l'entrée et la sortie du conduit de circulation dans la tour de fluidisation sont prévues respectivement à l'extrémité inférieure et supérieure de ladite tour, caractérisé en ce que le matériau biologique est introduit par une première ouverture (3) dotée d'une vanne (6) à l'extrémité supérieure de la tour de fluidisation (1), dans laquelle le matériau biologique est amené, au moyen de la vapeur circulante, à se fluidifier, le produit grillé étant évacué par une deuxième ouverture (5), dotée d'une vanne (6) à l'extrémité inférieure de la tour, et en ce que la vapeur est maintenue à une température d'au moins 260°C à l'entrée de la tour de fluidisation (1).

4. Procédé selon la revendication 3, caractérisé en ce que le matériau à griller est tout d'abord séché dans le même appareil ou dans un appareil différent, à une température d'environ 200°C.

5. Procédé selon les revendications 3 ou 4, caractérisé en ce que le matériau biologique est préséché, avant traitement ultérieur, en utilisant la chaleur, obtenue à l'issue de la réfrigération du matériau grillé évacué.

6. Procédé selon l'une quelconque des revendications précédentes, caractérisé en ce que la chambre de traitement (1, 101) de l'installation est un système intégré constitué de plusieurs conteneurs raccordés les uns aux autres, le séchage du matériau étant réalisé dans un premier conteneur et le grillage à la vapeur dans un second conteneur à la température la plus élevée des deux, le milieu chauffant, après diminution de la température dans le second conteneur, étant introduit par l'entrée (2, 102) du premier conteneur dans lequel la température est inférieure.
